# EUROPEAN PATENT SPECIFICATION

(11) **EP 1 676 114 B1**
(45) Date of publication and mention of the grant of the patent: **24.07.2013**
(21) Application number: 04770560.3
(22) Date of filing: 23.09.2004
(51) Int. Cl.: F21K 2/06, C09K 11/07

(54) **MULTI-SHAPE AND MULTI-COLOR CHEMILUMINESCENT DEVICE**
CHEMILUMINESZENZVORRICHTUNG IN MEHREREN FORMEN UND FARBEN
DISPOSITIF CHIMIOLUMINESCENT MULTIFORME ET MULTICOLORE

(30) Priority: 26.09.2003 US 672168
(43) Date of publication of application: 05.07.2006
(73) Proprietor: Formaglow Ltd, 86800 Arava (IL)
(72) Inventor: GOYCHRACH, Yuval, 75241 Rishon LeZion (IL)
(74) Representative: Lang, Johannes
(86) International application number: PCT/IL2004/000889
(87) International publication number: WO 2005/031298

(56) References cited:
- EP-A- 0 011 911
- EP-A- 0 489 219
- US-A- 3 800 132
- US-A- 3 893 938
- US-A- 4 814 949
- US-A- 5 171 081
- US-A- 5 190 367
- US-A- 5 226 710
- US-A1- 2003 048 631
- US-A1- 2003 111 379
- US-B2- 6 832 392
- US-E- R E35 132

## Description

### Field of the Invention

The present invention relates to a chemiluminescent device which, due to a special compartmentalization of the reactants and due to the use of more dyes, provides multi-shape and multi-color glowing images. The invention also provides three-dimensional, multicolor, chemiluminescent glowing objects.

### Background of the Invention

Chemiluminescence is the transformation of chemical energy into visible light without incandescence. Certain chemical reactions, such as oxidation of bis(aryl)oxalates or amino phthalhydrazide with hydrogen peroxide, are accompanied by the emission of cool light, wherein the effect is facilitated in the presence of a fluorescent dye. The type of dye affects color of the emitted light; for example, 9,10-diphenylanthracene produces blue light, 9,10-bis(phenylethynyl) anthracene produces green light, and 5,6,11,12-tetraphenylnaphthacene produces red light.

Chemiluminescence is used, for example, by fireflies; however, its potential has not yet been fully utilized by humans. US Pat. No. 3,539,794 describes a chemiluminescent device being a translucent container in which there are sealed compartments, separated by an easily breakable wall, wherein said compartments contain different components necessary to produce a chemiluminescent reaction. By breaking said wall, said components can mix and yield the light. US Pat. No. 3,808,414 describes a device for producing chemiluminescent light, consisting of two parallel sheets divided into rectangular compartments, wherein said compartments are sealed and contain different components for providing chemiluminescent reactions.

Mixing of said components is prevented by one sealing clip whose removal initiates the light production. US Pat. No. 3,893,938 describes a chemiluminescent means comprising a thin substrate to which part of the reactants necessary for the reaction are bound in the form of impregnation or as capsules; the remaining reactants are provided as a fluid. The reaction, in this rather broadly claiming patent, is started by either opening a clamp divider, or rupturing the divider between compartments, rupturing said capsules, pumping or spraying said fluid onto said substrate, etc. US Pat. No. 4,814,949 describes a chemiluminescent device comprising a translucent or transparent sheet having a shaped space in which one or two fragile capsules are placed, wherein said capsules contain a part of reactants necessary for the reaction, the remaining reactants being outside said capsules, said space being sealed by a second sheet. When breaking said capsules, the emitted light creates an image of said shaped space (e.g., heart- or arrow-shaped). US Pat. No. 5,226,710 describes a flexible, thin, chemiluminescent device having the internal space enclosed between a translucent sheet and a polymer-laminated metal foil, wherein said space is divided into two compartments containing the reactants. US Pat. No. 5,557,869 describes an artistic chemiluminescent display showing images of various shapes. Said display comprises at least one set of vials containing separate reactants, and a light control sheet into which a window is cut having a certain shape, thereby partially shading the light and creating a glowing shape. US Pat. No. 5,860,845 of the present inventor describes a chemiluminescent toy in the form of a glowing balloon, comprising two balloons one inside the other with a chamber between them comprising a pad and the reactants. US Pat. No. 6,758,572 describes a chemiluminescent element that consists of at least one inner poach placed in a bigger outer poach, wherein breaking said inner poach results in mixing the reactants and providing the light. If more inner poaches contain more different dyes, gradual breaking of said poaches provides gradually lights having different colors.

The chemiluminescent devices according to the prior art have several drawbacks, one being an inadequate mixing of the components in thin layers. When removing separators between larger compartments, or when breaking capsules, the concentrations of reactants are not distributed evenly along the glowing surface, causing a non-uniform glow. A common feature of the chemiluminescent device s according to the prior art is a limited means to affect the shape or pattern of glowing surfaces. The shape of glowing surfaces is determined solely by the shape of the container in which the reactants are mixed, or by a shade with a shaped window cut into it. As for the pattern, prior art devices do not enable any effects related to variations of color or intensity of the light emitted from different parts of the glowing surface.

It is therefore an object of this invention to provide a chemiluminescent device enabling to affect in a free and flexible way the shape and pattern of images created on the glowing surface.

It is another object of this invention to provide a chemiluminescent device enabling the creation of full-color images with good resolution.

It is still another object of this invention to provide a chemiluminescent device providing a uniform glow even over large and complex areas.

It is still a further object of this invention to provide a chemiluminescent device which is thin, flexible and foldable, and optionally inflatable.

It is a further object of this invention to provide a chemiluminescent device capable of emitting chemiluminescent light, wherein the light creates multi-shape and multi-color images on the surface, of said device.

It is a still further object of this invention to provide a chemiluminescent device capable of emitting chemiluminescent light, wherein the light illuminates multi-shape and multi-color images on the outer surface of said device.

This invention also aims at providing a process for the preparation of a chemiluminescent device producing multi-shape and multi-color glowing images or three-dimensional objects.

Other objects and advantages of present invention will appear as description proceeds.

### Summary of the Invention

This invention is defined by claim 1 relating to a chemiluminescent device providing multi-shape and optionally multi-color images comprising i) two fluid-impermeable polymer sheets of the same shape, sealed together at their edges to provide a space for reactants, at least one of said sheets being translucent or transparent; ii) one absorbent sheet (pad) having essentially the same shape as said fluid-impermeable sheets and placed between them in said space; iii) reactants capable of producing chemiluminescent effect, comprising at least one chemiluminescent compound, peroxide, solvent, and one or more fluorescent dyes; iv) separation means that prevents mixing said chemiluminescent compound and said peroxide before wishing to start said effect; and v) partition means providing that at least one of said reactants does not reach the whole volume of said space during said chemiluminescent effect; wherein said effect is reached by removing said separation means. In other words, the device has separation means that prevents the chemiluminescent reactants from mixing before wishing to start the reaction, and partition means that enables to prevent at least one of the reactants from mixing with the others even after starting the reaction. In some embodiments, the user can choose whether to activate simultaneously the whole device or gradually various parts of it.

Said transparent or translucent sheet is optionally printed with a desired translucent pattern, image, or artistic creation, or alternatively said sheet is covered by another outer printed transparent or translucent cover layer comprising an artistic creation, or said sheet may be provided with an adhesive printed label that is transparent or translucent, and is stuck on said sheet to provide a required pattern.

Said two fluid-impermeable sheets in a device according to this invention preferably comprise polyolefin layers 0.01 mm - 10 mm thick, and a pad preferably 0.01 mm - 15 mm thick. The invention provides a multi-shape image of one color when one dye is used, and it provides multi-shape and multi-color images when more dyes are used, or when one dye is used in combination with a printed image on the outer sheet. In a preferred arrangement, three dyes are used, red and green and blue, and all other colors are formed by combining them.

An important part of this invention is compartmentalizing the inner space of the device, and separating the reactants both before the desired chemiluminescent effect and during said effect, whereas the two separations are not the same, the latter being provided by said partition means. Said separation means comprise, preferably, capsules in which said peroxide or said chemiluminescent compounds are closed before starting said effect. A preferred partition means comprises immobilizing at least one of said reactants on said pad or depositing at least one dye on said pad. A printing technique is preferably used to deposit the dyes on some or all of inner surfaces of the device, wherein for example a single dye or mixtures of dyes can be used, and the printed pattern will provide said multi-shape and multi-color image after contacting peroxide and a chemiluminescent compound. Partition means, in the device of this invention, may comprise utilizing low mobility of some of reactants in the device space, wherein said low mobility can be, for example, related to high viscosity of liquid phases or by low solubility of at least one of said reactants in the instant solvent or by the properties of the absorbing pad. The preferred compartmentalization comprises a capsule array or a capsule network, an example being aluminum (Alu-Alu) blisters sheet known in the art of pharmaceutical packaging, or other known techniques. The use of microcapsules may provide higher image resolution. The reaction mixture, that yields the chemiluminescent effect, may comprise solution, suspension or emulsion, wherein some of said reactants may be completely dissolved or may be dissolved in emulsion droplets, or may be in the form of suspended particles, or may be entrapped in gel particles. For example, a dye may be dispersed on the pad in a dry form, whereas a peroxide is separated in one group of capsules and a chemiluminescent compound in another group of capsules; alternatively, the pad is impregnated with the solvent containing one or more components, whereas a peroxide is separated in capsules; of course, other combinations may be used in the device of this invention.

The invention is further defined by claim 45 relating to a process for the preparation of a chemiluminescent device, comprising i) providing an absorbent pad in the form of a thin sheet; ii) providing reactants capable of producing chemiluminescent effect, comprising at least one chemiluminescent compound, peroxide, solvent, and optionally one or more fluorescent dye; iii) separating at least said peroxide or said chemiluminescent compound within at least one non-permeable capsule; and iv) closing said pad between two fluid-impermeable polymer sheets of a shape similar to the shape of said pad, at least one of said sheets being translucent or transparent. In a preferred embodiment, said process further comprises v) providing a partition means preventing at least one of said reactants from reaching the whole volume of said space after breaking said capsule. Said process may further comprise steps of vi) optionally creating a required shape on the surface of said pad comprising non-fluorescent or fluorescent materials; and vii) contacting said pad with one or more reactants necessary for producing chemiluminescent effect, which contacting comprises impregnating, soaking, immersing, or spraying. Said creating may comprise printing or painting or spraying or immersing. Said material may comprise a compound selected from the group consisting of chemiluminescent compounds, fluorescent dyes, and their mixture. A preferred process according to the invention may be automated, taking said pad from a pad stack, or cutting said pad from a pad roll, printing on the pad a picture, possibly according to an instant order of a client, wetting the pad in said peroxide, and sealing the pad within an impermeable plastic bag. Said automatic process may provide said device on the spot, in the form of a glowing picture, possibly as a ticket, label, tag, advertisement, or personal identification for a short-term occasion, that can later be activated to show a glowing image. Said occasion may comprise a performance, disco, entrance to a shopping place, or entrance to a meeting or congress. A preferred automatic process according to the invention further comprises printing on said transparent or translucent sheet a multi-shape or multi-color picture visible in passing chemiluminescent light. In a preferred process according to the invention, Alu-Alu blisters are created by a technique of cold forming; and at least one reactant in liquid form is separated in said blisters.

A preferred embodiment of the invention is a chemiluminescent device in form of a greeting card or postcard. The invention also relates to a process for producing a greeting card comprising i) creating a blister sheet by cold forming technology, using soft temper aluminum laminate, for example lined or coated; ii) creating blisters by a technique of hot forming of polymers, which polymers are metal laminated, coated or lined; iii) filling the blisters with a first part of reactants in solution; iv) sealing (lidding) said blisters with hard temper aluminum; v) providing an absorptive cloth, preferably made of plastic polymer, and impregnating it with a second part of reactants in solution, optionally creating on it a picture or pattern with non-fluorescent or fluorescent dyes; vi) attaching said absorptive cloth onto said blister sheet; vii) attaching an outer plastic sheet on said absorptive cloth, said outer sheet optionally provided with a printed picture; viii) ensuring that the layers of said blister sheet and of said outer sheet and optionally of said absorptive cloth be sealed to each other at their edges, thereby creating the image part of said postcard; and ix) connecting said image part at said edges to an address part on which an address and a greeting are written or printed.

### Brief Description of the Drawings

The above and other characteristics and advantages of the invention will be more readily apparent through the following examples, and with reference to the appended drawings, wherein:
- Fig. 1.: shows possible distributions of the reactants between pads and capsules in the glowing sheet;
- Fig. 2.: shows a possible separation of liquid reactants during storage of the glowing sheet;
- Fig. 3.: shows a possible compartmentalization of reactants in the glowing sheet;
- Fig. 4.: shows possible structures of the capsules;
- Fig. 5.: is an expanded view of a glowing cylinder;
- Fig. 6.: shows an expanded view of a glowing multi-shape and multi-color article;
- Fig. 7.: schematically shows a process for the instant preparation of a glowing device;
- Fig. 8.: shows a division of the device by seams into more unconnected parts; and
- Fig. 9.: demonstrates a greeting postcard, an embodiment of the invention.

### Detailed Description of the Invention

As known in the art, a typical chemiluminescent reaction occurs in a mixture comprising a chemiluminescent compound (luminiscer), a fluorescent dye (fluorescer), a peroxide, and a solvent. Luminiscer and peroxide should be separated until the planned use. To start the illumination, all reactants are allowed to mix. Whereas the reactants in the prior art devices ultimately spread over the whole internal volume of the device, the device of this invention enables the separation of some reactants in certain areas till the end of chemiluminescent reaction, thereby enabling creation of glowing images and structures surprisingly rich in shape and color.

This invention comprises two fluid-impermeable polymer sheets, sealed together at least at their edges; one absorbent sheet (pad) having essentially the same shape as said fluid-impermeable sheets and placed between them in said space; reactants capable of producing chemiluminescent effect, comprising at least one chemiluminescent compound, peroxide, solvent, and one or more fluorescent dyes; separation means that prevents mixing said chemiluminescent compound and said peroxide before wishing to start said effect; and partition means providing that at least one of said reactants does not reach the whole volume of said space during said chemiluminescent effect; wherein said effect is reached by removing said separation means.

A device according to this invention comprises two outer polymer sheets that seal off the volume in which a chemiluminescent reaction can occur, and between them a porous, absorbent, thin pad; said sheets are close to each other and the device is usually a quasi two-dimensional object, whose surface glows after the start of the reaction. At least one of said sheets is translucent or transparent, making the front sheet (the non-glowing sheet making the back sheet). The device can be rigid or flexible, and it may be folded in three dimensions to form various shapes. This invention is based on the controlled separation of the components during the whole reaction period, and on the controlled space variation of their concentrations. The presence of two different fluorescer dyes at two points of the reaction volume can appear as two spots on the outer surface of the device having a different color. A difference between concentrations of the reactants at two points of the reaction volume may appear as two spots of different brightness, which may be an undesire d consequence of uneven mixing in the prior art applications, but which is utilized in this invention for creating an image built of many spots of different brightness and color, using the principles known in the printing technologies. The size of said spots will determine the resolution of imaging. On the other hand, a uniform glow over the total glowing area or a part of it can be achieved when desired. Said control over separation of the components, and over variation of their concentrations, is achieved by more or less delicate compartmentalization of the components inside the device, by their non-uniform deposition in the reaction volume, and by preventing their mixing. For example, a non-uniform deposition of three fluorescers on said pad can be designed so as to create a multicolor image and shape, possibly using a printing technique, which shape will appear on the outer surface of the device after contacting said pad with luminiscer and peroxide as an image glowing in many colors. The image contours will hold against blurring as far as mixing of luminiscers is prevented by said partition means, which may be achieved by immobilizing said fluorescer dyes onto said pad, or obstructing free diffusion, for example by increasing viscosity in the reaction volume, or otherwise. In a preferred embodiment of the device according to this invention, non-fluorescent pigments or dyes can be used to enrich the whole multi-color and multi-shape image. For example, black pigment may be used to accentuate silhouettes of glowing shapes printed on the pad. In another preferred embodiment, shapes may be printed with non-fluorescent colors on the inner or outer side of the front polymer sheet to be viewed in the fluorescent light of the device. In still another preferred embodiment, fluorescent images match or complement the printed shapes. The front sheet may be realized by more polymer layers, transparent or translucent, possibly differently printed.

One or two of said fluid-impermeable polymer sheets of a device according to the invention may be integrated in multilayer system comprising, for example, a laminate structure. In some embodiments, the surface of said sheets may deviate from smooth and flat form, for example being corrugated or wavy, either for aesthetic or for functional reasons. In a preferred embodiment of the invention, the back sheet is a part of polymer/aluminum/polymer laminate. Said laminate may comprise blisters in which liquid reactants are sealed off by polymer/aluminum lid. Techniques known in the art of pharmaceutical packaging may be employed for producing such blisters, using multilayers comprising, for example PP, PE, PVC, PVDC, PET, and aluminum foils. The capsules obtained in this way provide barrier to moisture, gases, and light. A preferred technique for preparing a device according to the invention comprises the cold forming method, using an Alu-Alu blister sheet with a polyolefin inner layer. For example, forming/filling/sealing procedure may be employed (FSS).

Different painting or spraying techniques known in the art may be used for covering the pad with fluorescent dyes. The required image may be created on said pad or said sheet by arranging microcapsules filled with different color dyes, or alternatively, the image may be directly printed on the pad or on said translucent or transparent sheet. The required color in the image may be achieved by using either premixed colors or separate basic colors, wherein the colors are either encapsulated or free. For example, a pink spot may be created by laying one type of capsules producing pink color, or by laying a mixture of two types of capsules - one producing red color, and the other white color.

The above said compartmentalization can be achieved, for example, by enclosing the reactants, namely luminescer, dyes, peroxide and solvent, into many capsules, with all possible combinations of reactants being inside/outside said capsules. The materials in the capsules are separated from the rest of reaction volume by a thin fragile or tearable wall. When referring to "a part of reactants", with regard to a device before the use, a part that does not contain both peroxide and luminiscer is meant. In a preferred embodiment of this invention, minicapsules are arranged in one layer on or within said pad, forming arrays or the whole network, wherein they can be deposited evenly with constant surface density, or unevenly arranged in a desired pattern, and wherein they may contain one or more reactants. In another preferred embodiment, said minicapsules are on or within said back sheet, or form an integral part of the back sheet. In a preferred embodiment of this invention, several dyes within capsules will be dispersed on the pad surface so as to form the required color image. When necessary, the distribution of the reactants in a dense capsule network enables to reach quickly the uniform distribution of all components over the whole area after the activation, providing uniform glow over large and complex areas of the same intended color. The device built according to the principles of this invention, comprising a capsule network, can exhibit uniform glow over the whole area of the device or over specific selected parts.

The pad, in fact the glowing heart of a device according to this invention, is a porous, flexible structure, capable of retaining a part of the reactants, and preferably capable of retaining all the liquid participating in the chemiluminescent reaction. Said pad may comprise a component selected from cotton, viscose, polyolefin fibers such as PE or PP, polyester, cellulose acetate, polyethylene glycol, polyvinyl alcohol, terephthalate, porous polyethylene fibers, porous PVC, nylon, glass fibers, cellulose, wool, or other absorptive materials, and their mixtures. The pad may resemble a material of the cigarette filter, or a cloth or paper, it can be woven or non-woven or layered, it may be chemically cross-linked or heat treated or otherwise processed to be made denser or firmer or to affect fluid absorption or fluid transport. The pad may be made of transparent or translucent materials. Said pad may be free or attached to at least one of the outer impermeable sheets, or to a blister sheet. It was surprisingly found by the inventor that pads made of certain materials intensify the luminescence effect, and make the illumination much stronger. Some pads even prolong the glowing time. One of the most preferred materials for prolonging the chemiluminescent effect in the device according to this invention is cotton fiber. Other preferred materials for making the pad are non-woven PE, PP, PET, glass fiber, polyester-viscose and cellulose acetate. Without wishing to be limited by any particular theory, the inventor believes that some polymers, possibly including polysaccharides, may stabilize certain activated species, and/or increase the yield of the luminescence process. In choosing a material for the pad, hydrophobic or hydrophilic character of the reaction mixture, which can contain more or less hydrophobic solvents and hydrophobic reactants, will be also taken into account, having in mind that the reaction mixture should be preferably absorbed in the pad.

Some embodiments of the device according to this invention, comprising cellulose-based pads, such as cotton pads, enabled persistent fluorescent glow, that in some cases lasted for more than fifty hours, which is surprising when considering that the glowing times of prior art devices are typically several hours.

The pad should have uniform density, and should enable good contact between absorbed reactants. In preferred embodiments, most of the light will be formed on the pad surfaces. The pad may be cut to an interesting shape, and may consist of more parts that are differently processed, or that are made of different materials, providing different glowing effects.

As said above, the reactants may be compartmentalized in any way, but peroxide should have no contact with the luminiscer before the use of the device. The pad may be uniformly impregnated with a part of the reactants, wherein the solvent is included or the pad is dry; or alternatively, the reactants may be deposited on/inside the pad either free or within capsules, possibly in a predetermined pattern, taking advantage of more or less limited diffusivity of the components in the pad.

The sheets enclosing the chemiluminescent device according to this invention are made of an impermeable polymer layer, preferably of a thin polyolefin layer, for example PE or PP sheet/film or foil. Said sheets are essentially parallel, and may be made of two or more different materials, such as PP/PE mixture, possibly comprising multilayer system, for example PE/PP/PE, PE/PP, PP/PE/PET, etc. In a preferred embodiment, the sheet on one side of the device comprises an aluminum foil, coated by a thin polymer layer preventing the contact of aluminum with the reactants. In another preferred embodiment. The non-glowing (back) sheet may be attached to a reflective layer, possibly comprising aluminum, in order to increase the amount of light emitted through the front sheet. The inner surface of this non-glowing side may serve as a base for placing capsule arrays, or for creating small compartments or pockets within it, depressions or cavities, utilizing the thermoplastic and elastic properties of the sheet. In a preferred embodiment, cold forming method including aluminum laminated sheet blisters creation is employed. In another preferred embodiment, both sheets are transparent or translucent and the device is glowing on both sides.

Capsules, preferably a network of minicapsules, may be attached either to said impermeable sheet or to the pad, or may be integrated into the pad or into the back sheet, possibly by heat or rapid mounting. In one of the preferred embodiments, comprising devices tens of centimeters in size, the size of capsules is from 0.1 mm to 15 mm. Of course that for larger devices, larger capsules or other compartments may be preferable. In certain embodiments, microcapsules are preferred. The device can be activated by tearing the capsules while pulling the product through a slot which is a part of its packaging, or by other mechanical or manual squashing. In a preferred embodiment of the device, arrays of minicapsules in the device are torn by pushing an object having an interesting shape against the surface of the device, thus imprinting said interesting shape onto the device, and causing the device to glow in this shape. For example, a hand may be imprinted onto the device. Said separation means of the device according to this invention may be removed gradually in different parts of the device; so that various parts of the image may start to glow at different times. For example, the activation of the left side of the device will light up an image of mouse, and the following activation of the right side will light up an image of cat.

Said peroxide is preferably hydroperoxide, such as alkylhydroperoxide or peroxoacid, and still more preferably it is hydrogen peroxide. Said luminiscer may be selected from derivatives of oxalic anhydrides or esters, derivatives of phthalhydrazide, derivatives of acridinium dyes, triphenylimidazole, and other compounds used in the art. The examples of suitable luminiscers comprise luminol, 10,10'-dimethyl-9,9'-biacridinium salts, 3-aminophthalhydrazide, 9-chlorocarbonyl-10-methylacridinium chloride, bis(2-nitrophenyl) oxalate, bis(2,4-dinitrophenyl) oxalate, bis(2,6-dichloro-4-nitrophenyl) oxalate, bis(2,4,6-trichlorophenyl) oxalate, bis(2,4,5-trichloro-6-carbobutoxyphenyl) oxalate, bis(2,4,5-trichloro-6-carbopentoxyphenyl) oxalate, bis-N-phthalimidyl oxalate, bis(1,2-dihydro-2-oxo-1-pyridyl) glyoxal, bis(pentachlorophenyl) oxalate, bis(2-formyl-4-nitrophenyl) oxalate, bis(2,5-dinitrophenyl) oxalate, bis(2,4-dichlorophenyl) oxalate, bis(1,2-dimethyl-4,6-dinitrophenyl) oxalate, bis(2-methyl-4,6-dinitrophenyl) oxalate, and bis(3-trifluoromethyl-4-nitrophenyl) oxalate. Said fluorescer may be selected from polyaromatic hydrocarbons, such as 9,10-bisphenylethynylanthracene (green), 5,6,11,12-tetraphenylnaphthacene (red), 9,10-diphenylanthracene (purple), 9,10-bis(4-methoxyphenyl)- anthracene (blue), 1,8-dichloro-9,10-bis (phenylethynyl)anthracene (yellow), 2-chloro-9,10-bis(phenylethynyl) anthracene, and 1-chloro-9,10-bisphenylethynylanthracene.

Said solvent may be selected from the solvents that do not interfere with the chemiluminescent effect. Esters may be used, such as dialkylphthalates, eventually combined with alcohols. Examples of preferred solvents used in a device according to this invention comprise dibutylphthalate, dimethylphthalate, butanol, etc.

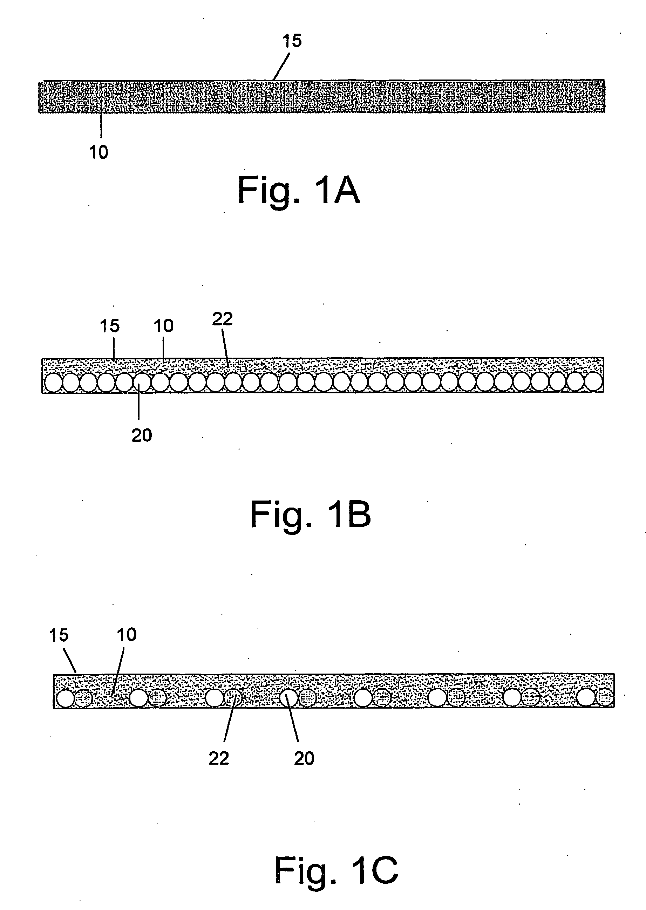

A possible configuration of components in a device according to this invention is illustrated in Fig. 1. Pad (10) is covered by outer sheet (15) in Fig. 1A. The pad can include capsules (circles in Fig. 1C), containing a part of reactants (20) or (22), wherein (22) may be a luminiscer, such as a solution of luminol, and (20) may be, for example, a peroxide, such as a solution of hydrogen peroxide. In one embodiment, Fig. 1B, reactant (22) is absorbed within the pad, and reactant (20) compartmentalized within the capsules. Reactant (22), possibly a dye, may be printed, sprayed or painted on the face surface of pad (10) in a predetermined pattern to create a picture which will glow after being contacted with reactant (20) after breaking the capsules. The pad may be impregnated with one or more reactants, which may be achieved by soaking, immersing, or spraying, wherein finally it may be either dry or wet.

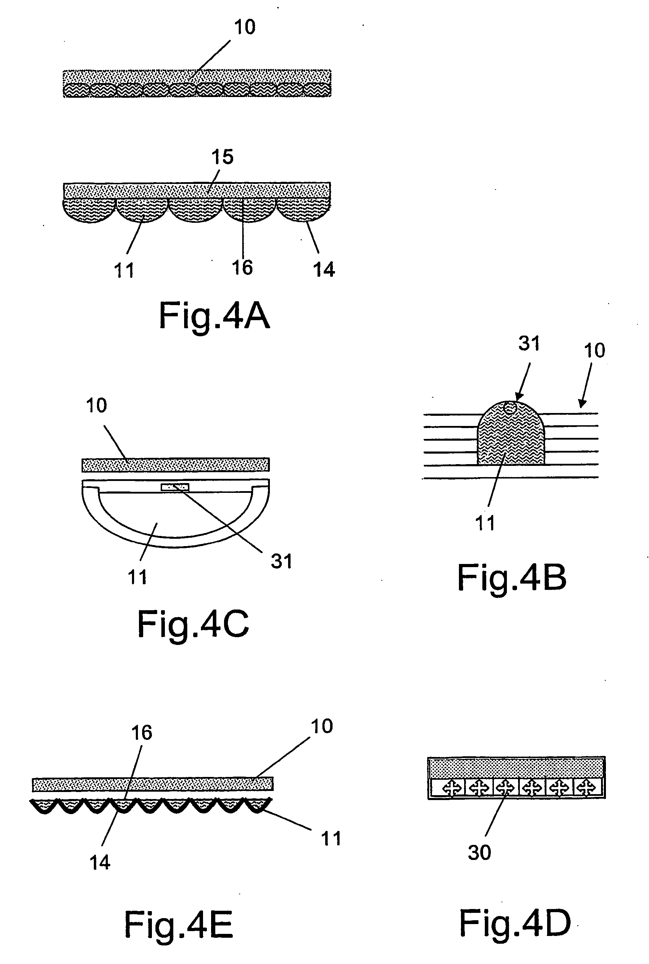

Whenever the term capsule is used, a small part of the reaction volume between two outer surfaces of the device is meant, wherein said small volume is separated from the rest of the reaction volume by an impermeable wall or membrane, or other obstacle to a free diffusion of reactants. The capsule may be attached to the pad or to the inner surface of the device, or may be created inside the pad or inside the sheets (Fig. 4A). Of course, that a capsule with fixed position has an advantage over an ampoule that can freely move inside the device. The inner surface of the device can be a part of said capsule. The capsule may have a form of a bubble, ampoule, a hollow grain, and may comprise thin glass, polymer, metal foil laminated with a polymer, or other materials that are inert and insoluble in the inner environment of the device. A preferred layer, closing a reactant within a capsule, and providing a barrier to the light, oxygen and moisture, is a laminated aluminum foil, shown as (14) in Fig. 4A. Said foil may be prepared by gluing the layers or by co-extrusion or by heat linkage or may comprise polymer dispersion with heat curing. The total capsule volume is designed so as to enable the necessary reactant amounts. In the case of the soft capsules, a gas entrapped inside, or a gas formed during the storage of the device, may inflate the capsules, and the overpressure may assist in rupturing the capsules upon activation of the pad device. A spike within the capsules, like spike 30 in Fig. 4D made of a suitable hard polymer, or a weak point 31 in Fig. 4C and 4B, assist in rupturing the capsule (11) within the pad (10). The capsules can be filled completely when necessary. An "air-bubble" sheet used in packaging fragile items, with the bubbles filled by reactant solutions, may serve as a model of a capsule network, the bubbles possibly being coated with thin aluminum foil. Said bubbles may be made of PE or PP, and may be coated with thin aluminum foil like in blisters sheets that are used for packaging and storage of drugs, such as Foils for Pharma Packaging, also known as a Alu-Alu Push Through or Tropical Blister Sheet, made by cold forming process. Reactants (20) and (22) can be stored in two different types of capsules, leaving pad (10) either soaked with pure solvent or dry (Fig. 1). For connecting or sealing the polymer components of the device of this invention, techniques known in the art are used, including welding, soldering, heat sealing, gluing, ultrasonic seal, RF soldering, etc. In arranging microcapsules upon the pad or the inner surface of the device, techniques known, for example, in the electronic industry, may be used. Controlled capsule implantation on a smooth surface may be used, either with or without gluing, whereas the capsules may be soft or hard, and the thermal inflation of polyethylene can be comprised, gas or liquid injection or vacuum pumping can be employed, as well as heat molding, injection and quenching gelatin capsules, and other encapsulation methods. In a preferred embodiment, the back fluid-impermeable polymer sheet is integrated with an aluminum foil (aluminum layer coated on both sides or on one side with a thin polymer layer) in a strong aluminum laminate (soft temper aluminum), and forms blisters, such as (14) in Fig. 4A and 4E. The blisters, containing liquid reactants, such as oxalates are sealed with a second aluminum laminate which is weaker (hard temper aluminum), such as lid (16) in Fig. 4E. Said weak lid breaks or tears under the pressure from outside, releasing said liquid reactants inside the device, followed by absorbing said reactants is pad (10).

In a preferred embodiment, the device glows on both sides. Two sides of the device of this invention may show different images. In one embodiment, the pad is a nontransparent layer having two different patterns printed with fluorescent dyes on its two sides, providing two different glowing images seen after the activation through two transparent outer sheets. In another embodiment of the glowing device according to this invention showing two different pictures on each side, two transparent or translucent outer sheets comprise two different pictures, which may be printed or painted or sprayed on these sheets, or which may be placed on said sheets in the form of stickers. Alternatively, another outer printed or not printed, transparent or translucent cover, may surround the device like an extra bag. The device of the invention may have adhesive properties on its back side to be able to serve as a sticker, or may comprise an attachment means to be attached at a desired place. Said sticker may be pre-prepared according to the instantaneous need or on a client's order.

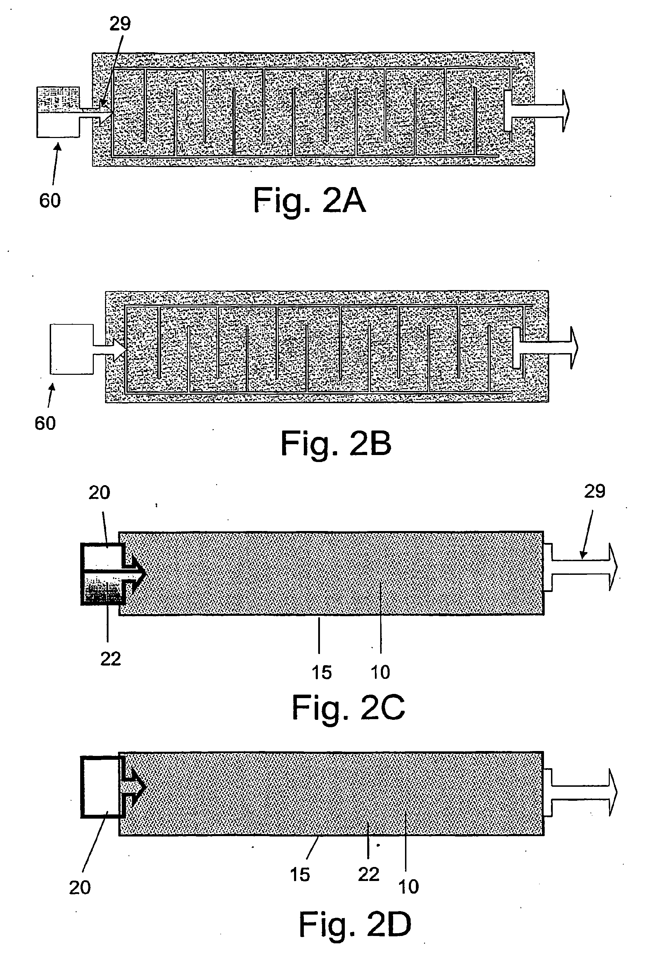

In another embodiment, as shown in Fig. 2, two reactants (Fig. 2A), or one reactant (Fig. 2B), are stored in separate chambers (60), and during the device activation they are simply pushed or sucked, for example by a syringe (29), into the reaction volume. Reactants (20) and (22) are pumped to the desired areas via tubing or channels, wherein the system is provided by a hermetical snap lock or other means to prevent any leakage of the liquids from the device. Said tubing may also provide mechanical support to the device, and may help in creating 3D forms, possibly comprising hollows or other complex features. Said chamber and syringe, or other disposable parts, are disposed of after the activation of the device. In another embodiment, the liquid reactants are pushed or sucked without the inner tubing, as shown in Fig. 2C and 2D.

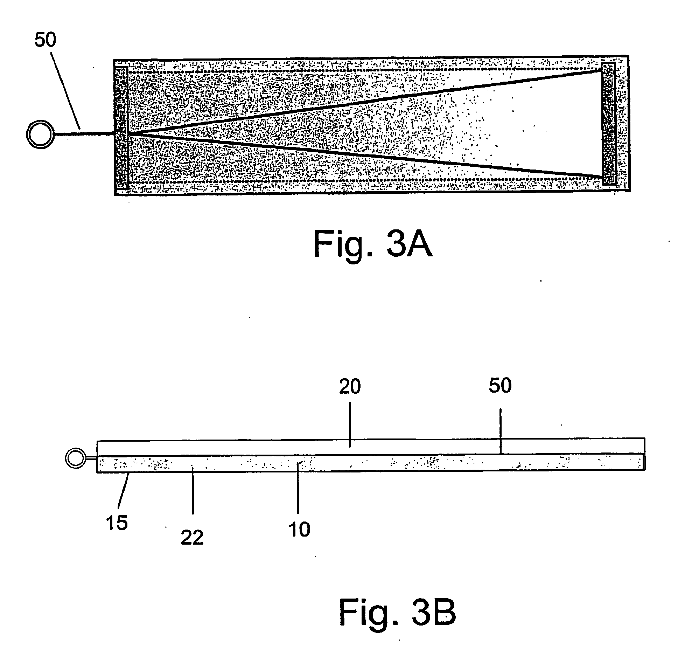

Reactants (20) and (22) can be separated during the storage by a separator as shown in Fig. 3A and 3B. Buffer (50) keeps the reactants from mixing until the moment of planned activation. The buffer divides the reaction volume into two separated parts. After pulling said buffer, a snap lock will prevent liquids from leaking. The buffer may be made, for example, of a hard temper aluminum foil coated by suitable polymeric layers, and further it may comprise a rigid bottom plastic sheet with thorns which pierce the buffer at the desired site on bending the device.

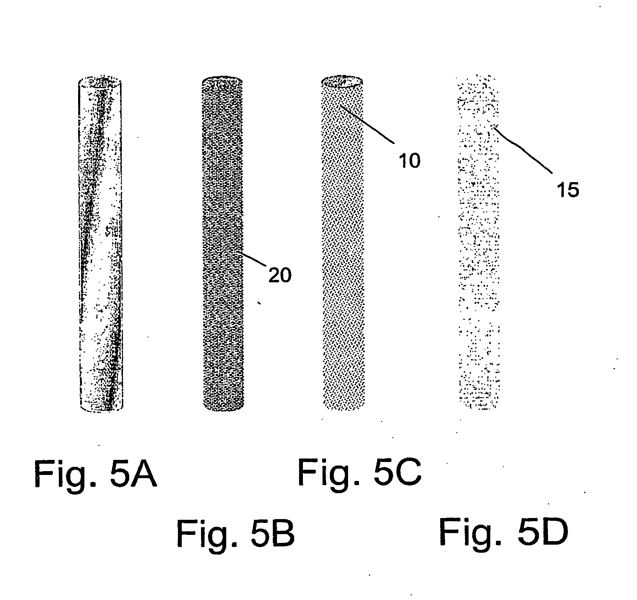

The device of this invention is not limited to planar objects, but can have other shapes to which a thin, quasi two dimensional, object can be folded or warped, such as cylindrical. In a preferred embodiment, a planar device is first activated to start the glow, and then folded in a three-dimensional shape. In another preferred embodiment, the cylindrical device is created, and activated when desired. Such cylindrical device may be made by gradual adding layers on a cylinder. A possible structure of such cylindrical device is shown in Fig. 5. First, the inner rigid PP cylinder is formed (Fig. 5A), then capsule layer (20) is created over said first layer (Fig. 5B), followed by adding pad (10) (Fig. 5C), and outer transparent sheet which is optionally printed (15) (Fig. 5D).

The device according to this invention may be provided with an external pre-testing indicator of the quality and freshness of the product.

In a preferred embodiment, microcapsules are used having a size less than 0.2 mm. For creating microcapsule arrays or networks, microencapsulation processes known in the art are used, producing liquid-containing microcapsules. For example, hardened gelatin, urea-formaldehyde, polyacrylate, vinyl type polymers, inorganic silica, or glass microcapsules, and the like are used, taking into consideration the stability of the material in the inner environment of the device.

Thus the present invention is directed to a device comprising two outer impermeable polymer sheets, an inner absorptive sheet, reactants placed within said two sheets enabling a chemiluminescent reaction, a separation means that prevents mixing luminescer with peroxide before switching on the illumination, and a partition means preventing at least one of the reactants from reaching the whole inner volume of the device; which device provides chemiluminescent images that are multi-shaped and optionally multi-colored. A device according to this invention, capable of glowing more than 48 hours, can be used in the domains of life saving and signaling services, control, amusement, advertising, lighting, emergency lighting, lighting in case of fire and explosion hazard, areas without energy supplies, yachts, airplanes, night diving, substitute for electricity, etc.

An important application of the device of this invention is the use in emergency night actions. Various thermo vision means are used nowadays, as well as various devices employing IR and UV light, non visible for the naked eye, marking the participants of said actions with thermo vision labels may be very useful, stickers can be attached, for example, to the helmets of said participants, etc. Other applications will include hidden barcodes or signals in a form of stickers and labels.

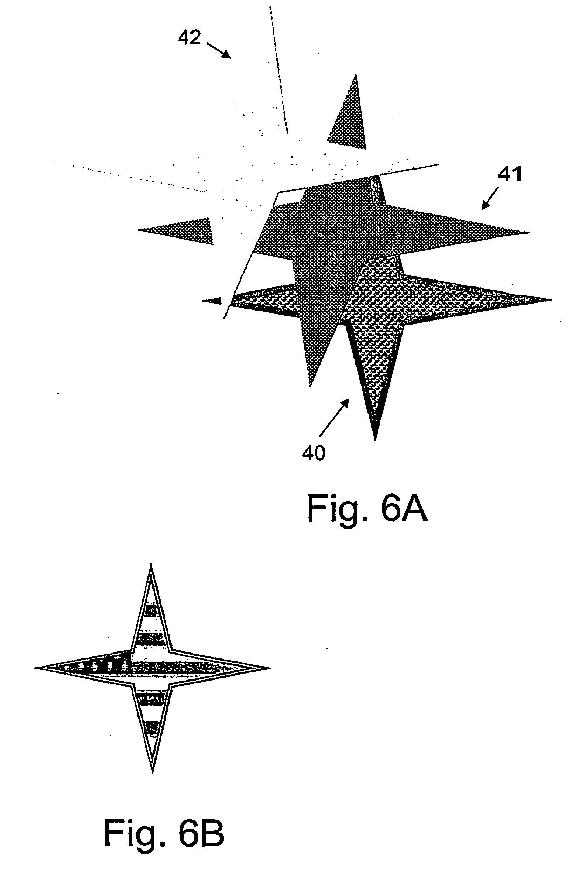

In a preferred embodiment of this invention, the emergency lightning is activated automatically in case of a power break in the dark areas, for example in the form of wall information posters or indication signs, such as glowing instructions, arrows, etc. The poster or sign may be wound in a box with a slot, and in case of a power break, weights are released, unwinding the poster and drawing it out of the box through the slot, breaking capsules and activating the device; alternatively, said released weights initiate pumping a reactant into the device, activating it, etc. Fig. 6B shows an example of the glowing, multi-color and multi-shape device, having a back layer comprising capsules layer (40), said back layer possibly comprising aluminum coated with PP or PE on one or both sides, further having a pad impregnated with a luminiscer and having the image printed with fluorescent dyes (41), and finally having a transparent printed or non-printed front layer (42).

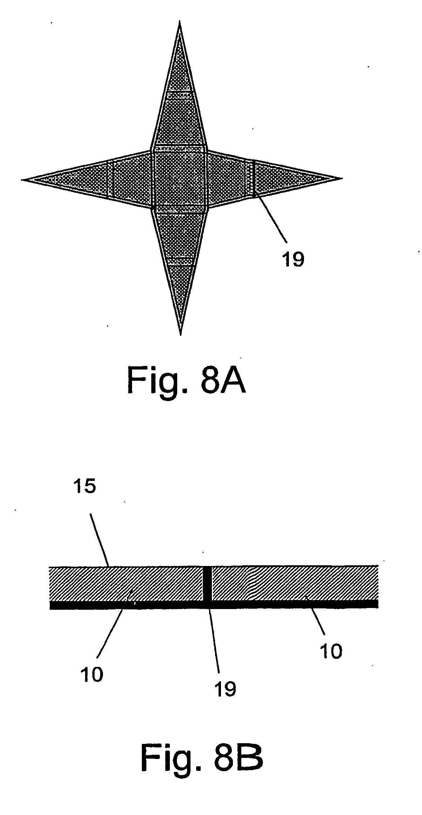

Said two outer impermeable sheets, enclosing the device, are fused at the edges (of their surface) to seal the reaction volume for the chemiluminescence reaction. Said two sheets may be further fused along certain lines within the surface of the sheets, thus forming seams along the device which, being a thin quasi two-dimensional object, can be easily folded in three dimensions. The fused areas may have the form of thin lines or wide stripes, such as (19) in Fig. 8. Said seams divide the reaction volume of the device into more unconnected parts, or alternatively, said seams separate the reaction volume of the device from the other parts of the device that can have other functions, such as providing a free cardboard surface for writing, etc. A complex device according to the invention may be obtained by gluing or welding more simpler devices together. Whether comprising said seams or not, a device according to this invention, thin and quasi two-dimensional, may be folded in three dimensions, when both outer sheets are sufficiently thin and flexible. In a preferred embodiment, a device according to this invention is a three dimensional object glowing in many colors, and exhibiting on its surface various shapes, characters, etc. An example of such an object is a toy having the shape of an animal. When combining more objects, including, for example, planar object comprising seams or a cylindrical one, which objects can be connected and interwoven in many ways, unlimitedly complex structures, glowing in many colors, may be built.

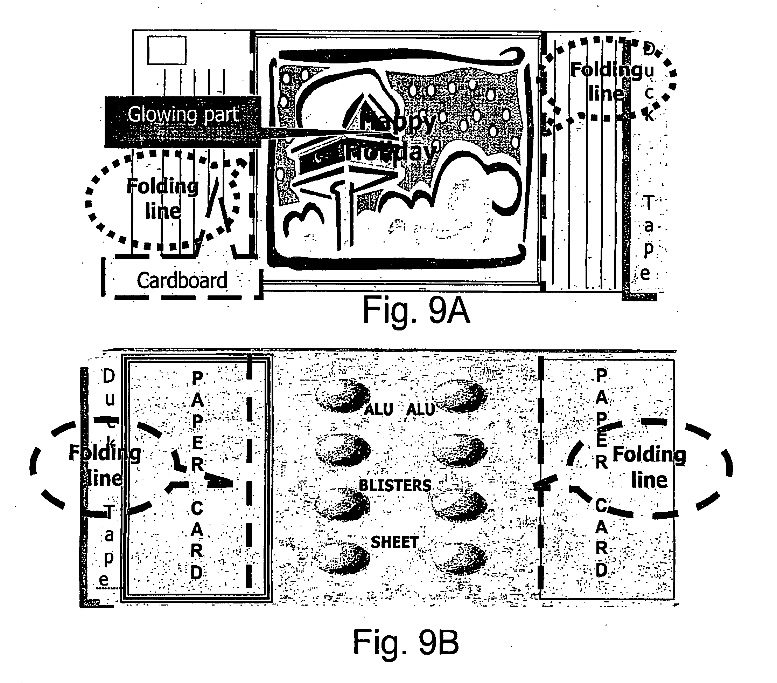

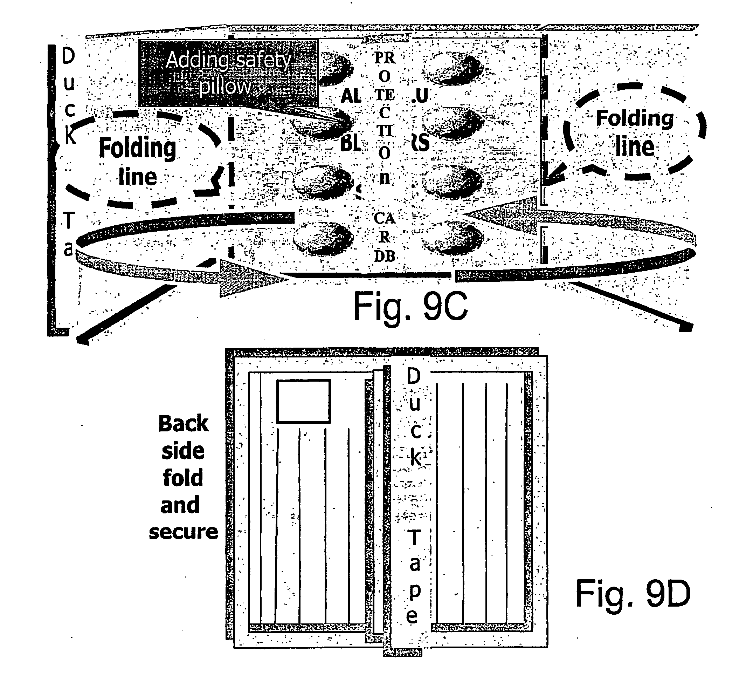

In a preferred embodiment of the invention, the chemiluminescent device is a greeting postcard. In a preferred embodiment, said postcard may comprise a front sheet and a back sheet which are sealed at their edges, closing the reaction space, wherein said front sheet is a fluid-impermeable, transparent or translucent plastic sheet, and said back sheet is an aluminum laminate sheet. In the reaction space, there is an absorbent pad. Said laminate sheet may comprise a soft temper Alu-Alu blisters sheet. The blisters contain a part of reactants, and may be closed by a second aluminum laminate sheet, such as hard temper aluminum laminate lid of the push-through type, comprising a cold forming technique. Said pad is impregnated with a part of reactants, and optionally is printed with fluorescent dyes to provide the glowing image. Said front sheet is optionally printed with a picture to be illuminated by the passing chemiluminescent light. Said front and back sheets, together with the pad, make the image part of the postcard. Said image part has an outer side, ultimately showing the image, and an inner side with the blisters to be pushed and broken by the addressee to start the effect. The image part is connected with one or two address parts on which the address and the greeting are written. The address parts may comprise cardboard, plastics, aluminum, etc., and are connected with the image part at the sealed edges of said front and back sheets of the device, which edges may be similar to the mentioned stripes (19) in Fig. 8. An example of a glowing postcard according to the invention is shown in Fig. 9. As can be seen in Fig. 9A, before sending the device, the address parts are folded along folding lines and closed, so that the postcard has an appearance of a very thin box with a picture on the front side, and an address (Fig. 9D) on the backside. Both the image p art and the address part are enough hard so as to keep their shape. A protection cardboard piece (Fig. 9C) or an air cushion is placed between the blisters, positioned slightly higher than said blisters, to prevent their breaking before arriving to the addressee. As shown in Fig. 9B, when opening the postcard, the addressee will remove the protection piece and will see the greeting written or printed on the margin paper card(s), either one or two margins are used for the greeting. text. Said preferred embodiment, thus, relates also to a method of producing a greeting postcard, comprising i) creating a blister sheet by cold forming technology, using soft temper aluminum laminate; ii) creating blisters by a technique of hot forming of polymers, which polymers are metal laminated; iii) filing the blisters with a first part of reactants in solution; iv) sealing (lidding) said blisters with hard temper aluminum foil, wherein the lid foil is slightly smaller than the bottom layer of soft temper aluminum to enable soldering to the transparent or translucent outer sheet; v) providing an absorptive, woven or non-woven, material, preferably made of plastic polymer such as PP, PE, or their mix, and impregnating it with a second part of reactants in solution, optionally creating on it a picture or pattern with non-fluorescent or fluorescent dyes; vi) positioning or attaching said absorptive cloth onto said blister sheet; vii) positioning or attaching an outer transparent or translucent plastic sheet on said absorptive cloth, said outer sheet optionally provided with a printed picture; viii) ensuring that the top and bottom layers or all the layers be sealed to each other at their edges, thereby creating the image part of said postcard; and ix) connecting said image part at said edges to an address part on which an address and a greeting are written or printed. Said layers may be sealed by soldering or gluing, preferably by heat soldering or ultrasonic seal. The postcard is folded before sending along the connections between said image part and said address part, and a safety cardboard pillow, or an air bubble packing sheet, is preferably placed into the folded card to protect the blisters from breaking. The product may be covered with cellophane, or otherwise decorated. In a preferred embodiment of the invention, said method of producing a greeting postcard comprises steps of i) creating a blister sheet by cold forming technology; ii) creating blisters by a technique of hot forming of polymers; iii) filing the blisters with a first part of reactants in solution; iv) sealing (lidding) said blisters with hard temper aluminum foil; v) providing an absorptive cloth and impregnating it with a second part of reactants in solution; vi) positioning or attaching said absorptive cloth onto said blister sheet; vii) providing an outer transparent or translucent plastic sheet with a printed picture or pattern on its surface, and positioning or attaching it on said absorptive cloth; viii) ensuring that the top and bottom layers or all the layers be sealed to each other at their edges, thereby creating the image part of said postcard; and ix) connecting said image part at said edges to an address part on which an address and a greeting are written or printed.

In one embodiment of the invention, said first part of reactants comprises peroxide, said second part of reactants comprises a luminiscer, and said absorptive cloth has a picture printed on it with fluorescent dyes. In another embodiment of the invention, said first part of reactants comprises a fluorescer and a luminiscer (such as 11% oxalate and 0.15% 9,10-bis(phenylethynyl)anthracene in dibuthyl phthalate) and said second part of reactants comprises a peroxide (such as 5.3% H₂O₂ in tertbutanol and dimethylphthalate), whereas said outer plastic sheet is provided with a printed picture. A glowing greeting card can be made in any shape and form. For example, it may be provided with a means enabling easily separating the glowing part from the paper part with the written text, or a means for using the glowing part as a sticker or a flag, the means possibly comprising means for attaching the device, a flag pole, etc. Amusing variations may be introduced, such as providing a set of pictures printed on a stripe of transparent foil longer than the device, which foil is rolled on two rods placed at opposite sides of the device; rolling said foil from one side to the other will provide moving-pictures effect.

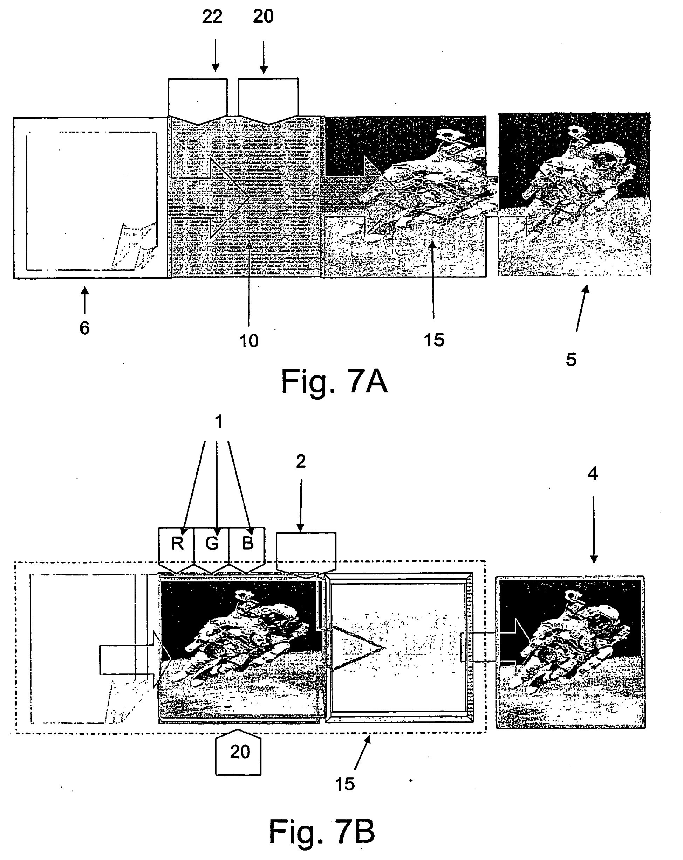

A device according to this invention may be easily prepared on the spot, for example enabling spontaneously required pictures to be created for clients at public entertainment occasions. In one embodiment, such picture is printed on the outer impermeable sheet, and is seen in the passing fluorescent light. In another embodiment, such picture is printed or painted on the pad, using fluorescent and luminescent materials. Thus, this invention is also directed to a process for the preparation of a chemiluminescent device, comprising i) providing an absorbent pad in the form of a thin sheet; ii) printing or painting or spraying a required shape on the surface of said pad, optionally using materials capable of producing chemiluminescent effect; iii) contacting said sheet with one or more reactants necessary for producing chemiluminescent effect, which contacting comprises impregnating, soaking, immersing, or spraying; and iv) closing said sheet between two fluid-impermeable polymer sheets of a shape similar to the shape of said pad, at least one of said sheets being translucent or transparent. Said material may comprise a compound selected from the group consisting of chemiluminescent compounds, fluorescent dyes, and their mixture. Said process is preferably automated, and includes taking said pad from a pad stack, creating on the pad a picture, possibly according to an instant order of a client, treating the pad with reactants, e.g. with a peroxide, and sealing the pad within impermeable, printed or non-printed, plastic sheets. Said stack may look, for example, like a stack of paper or polymer pieces, or like a roll of paper, and the pads may indeed comprise cellulose; alternatively, they may comprise PP, PET, glass fibers, or porous plastic. Said automatic process can provide on the spot a device in the form of a glowing picture or shape, possibly as a ticket, label, tag, advertisement, or personal identification for a short-term occasion, which occasion may be a performance, disco, entrance to a shopping centre, or entrance to a meeting or a congress. Said automatic process may be carried out using a standard printer modified for printing on a pad, and may comprise more chambers with the reactants. In one embodiment, as schematically shown in Fig. 7A, a peroxide (20) and a luminiscer (22) are applied separately in cartridges, wherein a fluorescer may be mixed with either of them, onto the pad (10) taken from the stack or roll (6), or the pad may be pre-soaked with some of reactants, and a non-fluorescent picture is printed on the cover sheet (15) that is finally attached over the pad, and the picture (5) is illuminated by the emitted luminescence. In another embodiment, Fig. 7B, the pad is gradually printed with three luminescent dyes having three basic colors (1), and with non-glowing black pigment (2), and then it is covered with transparent sheet/s or is enclosed in a bag translucent or transparent at least on one side (15), producing the glowing device (4). Of course, preparing a device on the spot, for instantaneous needs, as described above, may be adjusted so as to produce a device that can be activated anytime later, according to the need; the treatment of the pad by a peroxide (or other reactant), before delivering the device to a client, may be avoided, and one or more minicapsules containing peroxide (or other reactant) may be glued during the preparation process onto the pad to be broken later.

A device according to the invention may comprise light non visible for the naked eye, such as ultraviolet and infra red, in which case an instrument must be used to detect the images, and to convert them to a visible light. The device of this invention may comprise a heat-producing reaction localized within the device at certain spots in such a way that said spots may create a required image, said image being detectable by a night vision apparatus. A device according to the invention providing an IR image may be prepared, for example, by including filter layers adjacent to said translucent or transparent outer sheet, such as dark red plastic that will block visible light but will pass IR light, or by including IR or UV chemiluminescent dyes.

While this invention has been described in terms of some specific examples, many modifications and variations are possible. It is therefore understood that within the scope of the appended claims, the invention may be realized otherwise than as specifically described.

## Claims

1. A chemiluminescent device providing multi-shape and optionally multi-color images comprising
i) two fluid-impermeable polymer sheets of the same shape, sealed together at their edges to provide a space for reactants, at least one of said sheets being translucent or transparent;
ii) an absorbent sheet (pad) having essentially the same shape as said fluid-impermeable sheets and placed between them in said space;
iii) reactants capable of producing chemiluminescent effect, comprising at least one chemiluminescent compound, peroxide, solvent, and one or more fluorescent dyes;
iv) separation means that prevents mixing said chemiluminescent compound and said peroxide before wishing to start said effect, the separation means having a fixed position within said space provided by said two fluid-impermeable polymer sheets, said separation means being in the inner surface of one of said sheets, and being effected by capsules, capsule arrays, small compartments or pockets within said sheet, depressions or cavities, wherein said separation means are in the inner surface of a non-glowing sheet; and
v) partition means providing that at least one of said reactants does not reach the whole volume of said space during said chemiluminescent effect;
wherein said effect is started, and glowing images are created, by removing said separation means.

2. A device according to claim 1, wherein said two fluid-impermeable sheets comprise a polyolefin layer having thickness of from 0.01 mm to 10 mm.

3. A device according to claim 1, wherein one of said two fluid-impermeable sheets comprise an aluminum/polyolefin laminate.

4. A device according to claim 1, wherein said pad comprises a component selected from the group consisting of cotton, viscose, polyolefin fibers, non-woven PE or PP, polyester, cellulose acetate, polyethylene glycol terephthalate, glass fibers, cellulose, porous PVC, porous plastic, and their mixtures, wherein said component can be woven, non-woven, layered, and further can be chemically cross-linked or modified, or physically treated.

5. A device according to claim 1, wherein said pad is from about 0.01 mm to about 15 mm thick.

6. A device according to claim 1, wherein said chemiluminescent compound is selected from the group consisting of substituted bis(aryl)oxalate and substituted phthalhydrazide.

7. A device according to claim 1, wherein said fluorescent dye is an optionally substituted polyaromatic hydrocarbon, and said peroxide is a hydroperoxide.

8. A chemiluminescent device according to claim 1 wherein said reactants comprise one dye, providing multi-shape image, and optionally also multi-color image by printing a color picture onto said fluid-impermeable translucent or transparent sheet.

9. A chemiluminescent device according to claim 1 providing multi-shape and multi-color images, wherein said reactants comprise two or more dyes.

10. A chemiluminescent device according to claim 1 providing multi-shape and multi-color images, wherein said reactants comprise three or more dyes, such as having red, green, and blue colors, from which all other colors may be formed.

11. A chemiluminescent device according to claim 1 providing multi-shape and multi-color images, in which the color-forming dyes are pre-mixed before said effect is started.

12. A device according to claim 1, wherein said separation means comprise at least one capsule in which said peroxide or said chemiluminescent compound are closed before starting said effect.

13. A device according to claim 1, wherein said partition means comprises the division of said pad into more unconnected parts.

14. A device according to claim 1, wherein said partition means comprises immobilizing at least one of said reactants on said pad.

15. A device according to claim 1, comprising depositing at least one dye on said pad.

16. A device according to claim 15, wherein said depositing is performed by using a common printing technique.

17. A device according to claim 16, wherein at least one dye is deposited to create a pattern that can glow after contacting said pad with said peroxide and said chemiluminescent compound.

18. A device according to claim 16, wherein three dyes having red, green, and blue colors are used to enable forming all colors according to the additive system, and to create multi-color glowing image after contacting said pad with said peroxide and said chemiluminescent compound.

19. A device according to claim 1, wherein said partition means comprises lowering mobility of some of reactants in said space.

20. A device according to claim 19, wherein said mobility is lowered by lowering solubility of at least one of said reactants in said solvent.

21. A device according to claim 1, wherein said space is compartmentalized, and said reactants are separated in different compartments.

22. A device according to claim 21, comprising a capsule array or network.

23. A device according to claim 21, comprising a network of microcapsules.

24. A device according to claim 22 or 23, wherein the capsule distribution ensures the control over the intensity and color of the light emitted from the whole area of said device, and over the image resolution.

25. A device according to claim 22 or 23, wherein the capsule distribution ensures the uniform glow from the whole area having the same intended color.

26. A device according to claim 1, wherein said reactants are separated in different phases.

27. A device according to claim 1, wherein said separation means may be removed gradually, so that different parts of the image start to glow at different times.

28. A device according to claim 1, wherein said translucent or transparent sheet is printed on its surface providing a picture or characters seen in the passing fluorescent light.

29. A device according to claim 1, further comprising an additional outer transparent or translucent cover, adjacent to one or two of said fluid-impermeable sheets, wherein said cover is printed to produce a multi-shape or multi-color image in the passing chemiluminescent light.

30. A device according to claim 1, wherein said pad or at least one of the two sheets have patterns or pictures created on them by non-fluorescent dyes and pigments.

31. A device according to claim 30, wherein said patterns or pictures are printed on the inner or outer sides of said sheets or on one or both sides of said pad.

32. A device according to claim 1, wherein a translucent or transparent sticker is placed on the outer side of said sheets.

33. A device according to claim 1, glowing on both sides.

34. A device according to claim 33, showing different images on said two sides.

35. A device according to claim 1, wherein one of said two sheets comprises a reflexive layer.

36. A device according to claim 1, wherein said chemiluminescent effect comprises light non visible for the naked eye.

37. A device according to claim 36, wherein said light is selected from ultraviolet and infra-red.

38. A device according to claim 37 comprising thermo radiation.

39. A device according to claim 1, wherein said separation means comprises a capsule separated from the rest of the device by an impermeable layer.

40. A device according to claim 39, wherein said capsule has a form of an ampoule, or has a form of a bubble or cavity in said fluid impermeable sheet or in said pad.

41. A device according to claim 1, wherein said separation means comprises an Alu-Alu blisters sheet.

42. A device according to claim 41, wherein said blisters sheet is formed by cold forming method or by hot forming method.

43. A device according to claim 1, being a greeting card.

44. A device according to claim 1, having the shape of a flag.

45. A process for the preparation of a chemiluminescent device according to claim 1, comprising
i) providing an absorbent pad in the form of a thin sheet;
ii) providing reactants capable of producing chemiluminescent effect, comprising at least one chemiluminescent compound, peroxide, solvent, and one or more fluorescent dyes;
iii) separating at least said peroxide or said chemiluminescent compound within at least one non-permeable capsule;
iv) closing said pad between two fluid-impermeable polymer sheets of a shape similar to the shape of said pad, at least one of said sheets being translucent or transparent; and
v) providing a partition means preventing at least one of said reactants from reaching the whole volume of said space after breaking said capsule.

46. A process according to claim 45, further comprising
vi) optionally creating a required shape on the surface of said pad comprising non-fluorescent or fluorescent materials; and
vii) contacting said pad with one or more reactants necessary for producing chemiluminescent effect, which contacting comprises impregnating, soaking, immersing, or spraying.

47. A process according to claim 46, wherein said creating comprises printing or painting or spraying or immersing.

48. A process according to claim 46, wherein said material comprises a compound selected from the group consisting of chemiluminescent compounds, fluorescent dyes, and their mixture.

49. A process according to claim 45, which is automated, taking said pad from a pad stack, or cutting said pad from a pad roll, printing on the pad a picture, possibly according to an instant order of a client, wetting the pad in said peroxide, and sealing the pad within an impermeable plastic bag.

50. An automatic process according to claim 49, providing on the spot a device in the form of a glowing picture, possibly as a ticket, label, tag, advertisement, or personal identification for a short-term occasion.

51. An automatic process according to claim 50, wherein said occasion comprises a performance, disco, entrance to a shopping place, or entrance to a meeting or congress.

52. A process according to claim 45, further comprising viii) printing on said transparent or translucent sheet a multi-shape or multi-color picture visible in passing chemiluminescent light.

53. A process according to claim 45, further comprising ix) creating Alu-Alu blisters by a technique of cold forming; and x) separating in said blisters at least one reactant, in a liquid form.

54. A device according to claim 1, being a greeting card or postcard.

55. A process according to claim 45, for producing a chemiluminescent device in the form of a greeting card comprising
i) creating a blister sheet by cold forming technology, using soft temper aluminum laminate;
ii) creating blisters by a technique of hot forming of polymers, which polymers are metal laminated;
iii) filling the blisters with a first part of reactants in solution;
iv) sealing (lidding) said blisters with hard temper aluminum;
v) providing an absorptive cloth, preferably made of plastic polymer, and impregnating it with a second part of reactants in solution, optionally creating on it a picture or pattern with non-fluorescent or fluorescent dyes;
vi) positioning or attaching said absorptive cloth onto said blister sheet;
vii) positioning or attaching an outer plastic sheet on said absorptive cloth, said outer sheet optionally provided with a printed picture;
viii) ensuring that the layers of said blister sheet and said outer sheet and optionally said absorptive cloth be sealed to each other at their edges, thereby creating an image part of said postcard, and
ix) connecting said image part at said edges to an address part on which an address and a greeting are written or printed.

56. A process according to claim 55, comprising
i) creating a blister sheet by cold forming technology;
ii) creating blisters by a technique of hot forming;
iii) filling the blisters with a first part of reactants in solution;
iv) sealing (lidding) said blisters with hard temper aluminum;
v) providing an absorptive cloth and impregnating it with a second part of reactants in solution;
vi) positioning or attaching said absorptive cloth onto said blister sheet;
vii) providing an outer plastic sheet with a printed picture or pattern on its surface, and positioning or attaching it on said absorptive cloth;
viii) ensuring that the layers of said blister sheet and said outer sheet and optionally said absorptive cloth be sealed to each other at their edges, thereby creating the image part of said postcard, and
ix) connecting said image part at said edges to the address part on which an address and a greeting are written or printed.

57. A process according to claim 55, wherein said layers are sealed by soldering or gluing.

58. A process according to claim 55, wherein said postcard is folded before sending along the connections between said image part and said address part.

59. A process according to claim 55, wherein said postcard comprises a safety piece preventing said blisters from breaking before arriving to the addressee.

## Patentansprüche

1. Chemilumineszente Vorrichtung zur Bereitstellung von Multiform- und optional Multifarbbildern, umfassend
i) zwei flüssigkeitsdichte Polymerblätter der gleichen Form, die an ihren Kanten miteinander abgedichtet sind, um einen Raum für Reaktionsmittel bereitzustellen, wobei zumindest eines der Blätter durchscheinend oder transparent ist;
ii) ein Absorptionsblatt (Polster), welches im Wesentlichen dieselbe Form wie die flüssigkeitsdichten Blätter aufweist, und zwischen ihnen in dem Raum angeordnet ist;
iii) Reaktionsmittel, die in der Lage sind einen chemilumineszenten Effekt zu erzeugen, umfassend zumindest einen chemilumineszenten Verbund, Peroxid, ein Lösungsmittel und eines oder mehrere fluoreszente Färbemittel;
iv) Trennungsmittel, die ein Mischen des chemilumineszenten Verbunds und des Peroxids vor einem Wunsch den Effekt zu starten verhindert, wobei das Trennungsmittel eine feste Position innerhalb des Raums einnimmt, welcher durch die zwei flüssigkeitsdichten Polymerblätter bereitgestellt wird, wobei das Trennungsmittel in der inneren Oberfläche von einem der Blätter liegt, und durch Kapseln, Kapselfelder, kleine Abteile oder Taschen innerhalb des Blatts, Einsenkungen oder Hohlräume ausgeführt ist, wobei die Trennungsmittel in der inneren Oberfläche eines nichtleuchtenden Blatts liegen; und
v) Teilungsmittel, die erreichen, dass zumindest eines der Reaktionsmittel nicht das gesamte Volumen des Raums während des chemilumineszenten Effekts erreicht;
wobei der Effekt gestartet und leuchtende Bilder erzeugt werden durch Entfernen des Trennungsmittels.

2. Vorrichtung nach Anspruch 1, bei welcher die zwei flüssigkeitsdichten Blätter eine Polyolefinschicht mit einer Dicke von 0,01 mm bis 10 mm umfassen.

3. Vorrichtung nach Anspruch 1, bei welcher eines der zwei flüssigkeitsdichten Blätter ein Aluminium/Polyolefinlaminat umfasst.

4. Vorrichtung nach Anspruch 1, bei welcher das Polster eine Komponente umfasst, die ausgewählt ist aus der Gruppe, die besteht aus Baumwolle, Viskose, Polyolefinfasern, nichtgewebtes PE oder PP, Polyester, Zelluloseacetat, Polyethylenglykolterephthalat, Glasfasern, Zellulose, poröses PVC, poröser Kunststoff und ihre Mischungen, wobei die Komponente gewogen, ungewogen, geschichtet, und weiterhin chemisch quervernetzt oder modifiziert oder physikalisch behandelt sein kann.

5. Vorrichtung nach Anspruch 1, bei welcher das Polster ungefähr 0,01 bis ungefähr 15 mm dick ist.

6. Vorrichtung nach Anspruch 1, bei welcher der chemilumineszente Verbund aus der Gruppe ausgewählt ist, die aus substituiertem Bis(aryl)oxalat und substituiertem Phthalhydrazid besteht.

7. Vorrichtung nach Anspruch 1, bei welcher das fluoreszente Färbemittel ein optional substituiertes polyaromatisches Hydrokarbon ist, und das Peroxid ein Hydroperoxid ist.

8. Chemilumineszente Vorrichtung nach Anspruch 1, bei welcher die Reaktionsmittel ein Färbemittel umfassen, und ein Multiformbild, und optional auch ein Multifarbbild bereitstellen durch Drucken eines Farbbildes auf das flüssigkeitsdichte durchscheinende oder transparente Blatt.

9. Chemilumineszente Vorrichtung nach Anspruch 1, die Multiform- oder Multifarbbilder bereitstellt, wobei die Reaktionsmittel zwei oder mehr Färbemittel umfassen.

10. Chemilumineszente Vorrichtung nach Anspruch 1, die Multiform- oder Multifarbbilder bereitstellt, wobei die Reaktionsmittel drei oder mehrere Färbemittel umfassen, wie solche, die rote, grüne und blaue Farben aufweisen, aus denen alle anderen Farben gebildet werden können.

11. Chemilumineszente Vorrichtung nach Anspruch 1, die die Multiform- oder Multifarbbilder bereitstellt, in welcher die farbbildenden Färbemittel vorgemischt werden, bevor der Effekt gestartet wird.

12. Vorrichtung nach Anspruch 1, bei welcher die Trennungsmittel zumindest eine Kapsel umfassen, in welcher das Peroxid oder der chemilumineszente Verbund vor dem Starten des Effekts geschlossen werden.

13. Vorrichtung nach Anspruch 1, bei welcher die Teilungsmittel die Unterteilung des Polsters in mehr nicht verbundene Teile umfasst.

14. Vorrichtung nach Anspruch 1, bei welcher die Teilungsmittel ein Immobilisieren von zumindest einem der Reaktionsmittel auf dem Polster umfassen.

15. Vorrichtung nach Anspruch 1, die ein Abscheiden von zumindest einem Färbemittel auf dem Polster umfasst.

16. Vorrichtung nach Anspruch 15, bei welcher das Abscheiden unter Verwendung einer üblichen Drucktechnologie durchgeführt wird.

17. Vorrichtung nach Anspruch 16, bei welcher zumindest ein Färbemittel abgeschieden wird, um ein Muster zu erzeugen, welches nach einem Kontaktieren des Polsters mit dem Peroxid oder dem chemilumineszenten Verbund leuchten kann.

18. Vorrichtung nach Anspruch 16, bei welcher drei Färbemittel mit roten, grünen und blauen Farben verwendet werden, um ein Bilden aller Farben gemäß dem Zumischungssystem zu ermöglichen, und um ein Multifarbleuchtbild nach dem Kontaktieren des Polsters mit dem Peroxid und dem chemilumineszenten Verbund zu erzeugen.

19. Vorrichtung nach Anspruch 1, bei welcher das Teilungsmittel ein Verringern der Mobilität von einigem Reaktionsmittel in dem Raum umfasst.

20. Vorrichtung nach Anspruch 19, bei welcher die Mobilität durch ein Verringern der Löslichkeit von zumindest einem der Reaktionsmittel in dem Lösungsmittel verringert wird.

21. Vorrichtung nach Anspruch 1, bei welcher der Raum in Abteile aufgeteilt ist, und die Reaktionsmittel in verschiedene Abteile aufgeteilt sind.

22. Vorrichtung nach Anspruch 21, welche ein Kapselfeld oder Netzwerk umfasst.

23. Vorrichtung nach Anspruch 21, die ein Netzwerk aus Mikrokapseln umfasst.

24. Vorrichtung nach Anspruch 22 oder 23, bei welcher die Kapselverteilung die Steuerung über die Intensität und Farbe des Lichts sicherstellt, welches vom gesamten Gebiet der Vorrichtung ausgestrahlt wird und über die Bildauflösung.

25. Vorrichtung nach Anspruch 22 oder 23, bei welcher die Kapselverteilung das gleichförmige Leuchten über das gesamte Gebiet mit derselben gewünschten Farbe sicherstellt.

26. Vorrichtung nach Anspruch 1, bei welcher die Reaktionsmittel in verschiedene Phasen aufgetrennt werden.

27. Vorrichtung nach Anspruch 1, bei welcher die Trennungsmittel graduell entfernt werden können, so dass verschiedene Teile des Bildes zu verschiedenen Zeiten zu leuchten beginnen.

28. Vorrichtung nach Anspruch 1, bei welcher das durchscheinende oder transparente Blatt auf seiner Oberfläche gedruckt ist, um ein Bild oder Zeichen bereitzustellen, welche in dem durchlaufenden fluoreszenten Licht gesehen werden.

29. Vorrichtung nach Anspruch 1, weiterhin eine zusätzliche äußere transparente oder durchscheinende Abdeckung umfassend, die benachbart zu einem oder zwei der flüssigkeitsdichten Blätter ist, wobei die Abdeckung bedruckt ist, um ein Multiform- oder Multifarbbild in dem durchlaufenden chemilumineszenten Licht zu erzeugen.

30. Vorrichtung nach Anspruch 1, bei welcher das Polster oder zumindest eines der zwei Blätter Muster oder Bilder aufweisen, die auf ihnen durch nichtfluoreszierende Färbemittel und Pigmente erzeugt wurden.

31. Vorrichtung nach Anspruch 30, bei welcher die Muster oder Bilder auf den inneren oder äußeren Seiten der Blätter oder auf einer oder beiden Seiten des Polsters gedruckt sind.

32. Vorrichtung nach Anspruch 1, bei welcher ein durchscheinender oder transparenter Aufkleber auf der Außenseite der Blätter angeordnet ist.

33. Vorrichtung nach Anspruch 1, welche auf beiden Seiten leuchtet.

34. Vorrichtung nach Anspruch 32, welche verschiedene Bilder auf den zwei Seiten zeigt.

35. Vorrichtung nach Anspruch 1, bei welcher eines der zwei Blätter eine reflektierende Schicht umfasst.

36. Vorrichtung nach Anspruch 1, bei welcher der chemilumineszente Effekt Licht umfasst, welches für das bloße Auge nicht sichtbar ist.

37. Vorrichtung nach Anspruch 36, bei welcher das Licht aus ultraviolet und infrarot ausgewählt wird.

38. Vorrichtung nach Anspruch 37, welche Wärmeabstrahlung umfasst.

39. Vorrichtung nach Anspruch 1, bei welcher das Trennungsmittel eine Kapsel umfasst, die vom Rest der Vorrichtung durch eine undurchlässige Schicht getrennt ist.

40. Vorrichtung nach Anspruch 39, bei welcher die Kapsel eine Form einer Ampulle aufweist, oder eine Form einer Blase oder eines Hohlraums in dem flüssigkeitsdichten Blatt oder in dem Polster aufweist.

41. Vorrichtung nach Anspruch 1, bei welcher das Trennungsmittel ein Alu-Alu-Blisterblatt umfasst.

42. Vorrichtung nach Anspruch 41, bei welcher das Blisterblatt durch ein Kaltverformungsverfahren oder durch ein Warmverformungsverfahren gebildet wird.

43. Vorrichtung nach Anspruch 1, die eine Grußkarte ist.

44. Vorrichtung nach Anspruch 1, die die Form einer Flagge aufweist.

45. Verfahren zur Vorbereitung einer chemilumineszenten Vorrichtung nach Anspruch 1, umfassend
i) Bereitstellen eines Absorptionspolsters in der Form eines dünnen Blattes;
ii) Bereitstellen von Reaktionsmitteln, die in der Lage sind, einen chemilumineszenten Effekt zu erzeugen, umfassend zumindest einen chemilumineszenten Verbund, Peroxid, ein Lösungsmittel und eines oder mehrere fluoreszente Färbemittel;
iii) Trennen von zumindest dem Peroxid oder dem chemilumineszenten Verbund innerhalb zumindest einer nichtdurchlässigen Kapsel;
iv) Einschließen des Polsters zwischen den zwei flüssigkeitsdichten Polymerblättern mit einer Form, die gleich ist zu der Form des Polsters, wobei zumindest eines der Blätter durchscheinend oder transparent ist; und
v) Bereitstellen eines Teilungsmittels, welches zumindest eines der Reaktionsmittel daran hindert, das gesamte Volumen des Raums nach einem Brechen der Kapsel zu erreichen.

46. Verfahren nach Anspruch 45, weiter umfassend
vi) optionales Erzeugen einer benötigten Form auf der Oberfläche des Polsters, welches nicht fluoreszierende und fluoreszierende Materialien umfasst; und
vii) Kontaktieren des Polsters mit einem oder mehreren Reaktionsmitteln, die zum Erzeugen eines chemilumineszenten Effekts notwendig sind, wobei das Kontaktieren ein Imprägnieren, Durchweichen, Eintauchen oder Sprühen umfasst.

47. Verfahren nach Anspruch 46, bei welchem das Erzeugen ein Drucken oder Malen oder Sprühen oder Eintauchen umfasst.

48. Verfahren nach Anspruch 46, bei welchem das Material einen Verbund umfasst, der ausgewählt ist aus der Gruppe, die besteht aus chemilumineszenten Verbünden, fluoreszenten Färbemitteln und ihrer Mischung.

49. Verfahren nach Anspruch 45, welches automatisiert ist, Aufnehmen des Polsters von einem Polsterstapel, oder Schneiden des Polsters von einer Polsterrolle, Drucken eines Bildes auf das Polster, möglicherweise nach einem direkten Auftrag eines Kunden, Befeuchten des Polsters in dem Peroxid, und Abdichten des Polsters innerhalb einer undurchlässigen Kunststofftasche.

50. Ein automatisches Verfahren nach Anspruch 49, auf der Stelle Bereitstellen einer Vorrichtung in der Form eines leuchtenden Bildes, möglicherweise als ein Ticket, Label, Tag, Werbung oder eine persönliche Identifikation für eine Kurzzeitgelegenheit.

51. Automatisches Verfahren nach Anspruch 50, bei welchem die Gelegenheit eine Aufführung, Diskothek, Eintritt in einem Einkaufsort, oder Eintritt in eine Besprechung oder einen Kongress umfasst.

52. Verfahren nach Anspruch 45, weiterhin umfassend
viii) Drucken eines Mehrform- oder Mehrfarbbildes auf das transparente oder durchscheinende Blatt, wobei das Bild in durchlaufendem chemilumineszenten Licht sichtbar ist.

53. Verfahren nach Anspruch 45, weiterhin umfassend:
ix) Erzeugen eines Alu-Alu-Blisters durch eine Kaltverformungstechnik; und
x) Trennen von zumindest einem Reaktionsmittel in einer flüssigen Form in den Blistern.

54. Vorrichtung nach Anspruch 1, die eine Grußkarte oder eine Postkarte ist.

55. Verfahren nach Anspruch 45 zum Erzeugen einer chemilumineszenten Vorrichtung in der Form einer Grußkarte, umfassend
i) Erzeugen eines Blisterblattes durch eine Kaltverformungstechnologie unter Verwendung eines Aluminiumlaminats im weichen Zustand;
ii) Erzeugen von Blistern durch eine Warmverformungstechnik von Polymeren, wobei die Polymere metallisch laminiert sind;
iii) Füllen der Blister mit einem ersten Teil der Reaktionsmittel in Lösung;
iv) Abdichten (Abdecken) der Blister mit Aluminium im harten Zustand;
v) Bereitstellen eines Absorptionsstoffes, vorzugsweise aus einem Kunststoffpolymer, und Imprägnieren des Absorptionsstoffes mit einem zweiten Teil der Reaktionsmittel in Lösung, optionales Erzeugen eines Bildes oder Musters mit nicht fluoreszenten oder fluoreszenten Färbemittel auf dem Absorptionsstoff;
vi) Positionieren oder Befestigen des Absorptionsstoffes auf dem Blisterblatt;
vii) Positionieren oder Befestigen eines äußeren Kunststoffblattes auf dem Absorptionsstoff, wobei das äußere Blatt optional mit einem gedruckten Bild versehen ist;
viii) Sicherstellen, dass die Schichten des Blisterblattes und des äußeren Blattes und optional der Absorptionsstoff an ihren Kanten miteinander abgedichtet sind, und dabei ein Teilbild der Postkarte erzeugen, und
ix) Verbinden des Bildteils an den Kanten zu einem Adressteil, auf welches eine Adresse und ein Gruß geschrieben oder gedruckt werden.

56. Verfahren nach Anspruch 55, umfassend:
i) Erzeugen eines Blisterblattes durch eine Kaltverformungstechnologie;
ii) Erzeugen von Blistern durch eine Warmverformungstechnik;
iii) Füllen der Blister mit einem ersten Teil der Reaktionsmittel in Lösung;
iv) Abdichten (Abdecken) der Blister mit einem Aluminium im harten Zustand;
v) Bereitstellen eines Absorptionsstoffes und Imprägnieren des Absorptionsstoffes mit einem zweiten Teil der Reaktionsmittel in Lösung;
vi) Positionieren oder Befestigen des Absorptionsstoffes auf dem Blisterblatt;
vii) Bereitstellen eines äußeren Kunststoffblattes mit einem gedruckten Bild oder Muster auf seiner Oberfläche und Positionieren oder Befestigen des Kunststoffblattes auf dem Absorptionsstoff;
viii) Sicherstellen, dass die Schichten des Blisterblattes und des äußeren Blattes und optional des Absorptionsstoffes an ihren Kanten miteinander abgedichtet sind, um dabei den Bildteil der Postkarte zu erzeugen, und
ix) Verbinden des Bildteils an den Kanten zu dem Adressteil, auf welches eine Adresse oder ein Gruß geschrieben oder gedruckt werden.

57. Verfahren nach Anspruch 55, bei welchem die Schichten durch Löten oder Kleben abgedichtet werden.

58. Verfahren nach Anspruch 55, bei welchem die Postkarte vor einem Versenden entlang der Verbindungen zwischen dem Bildteil und dem Adressteil gefaltet wird.

59. Verfahren nach Anspruch 55, bei welchem die Postkarte ein Sicherheitsstück umfasst, welches verhindert, dass die Blister vor der Ankunft beim Empfänger brechen.

## Revendications

1. Dispositif chimioluminescent fournissant des images multiformes, et en option à plusieurs couleurs, comprenant
i) deux feuilles polymères imperméables aux fluides ayant la même forme, scellées l'une à l'autre au niveau de leurs bords, de façon à créer un espace pour des réactifs, au moins l'une desdites feuilles étant translucide ou transparente ;
ii) une feuille absorbante (support) ayant sensiblement la même forme que lesdites formes imperméables aux fluides, et placée entre elles dans ledit espace ;
iii) des réactifs capables de produire un effet chimioluminescent, comprenant au moins un composé chimioluminescent, un peroxyde, un solvant, et un ou plusieurs colorants fluorescents ;
iv) un moyen de séparation, qui empêche un mélange dudit composé chimioluminescent et dudit peroxyde avant que l'on souhaite lancer ledit effet, le moyen de séparation ayant une position fixe à l'intérieur dudit espace créé par lesdites deux feuilles polymères imperméables aux fluides, ledit moyen de séparation se trouvant dans la surface interne de l'une desdites feuilles et étant réalisé par des capsules, des réseaux de capsules, de petits compartiments ou des poches à l'intérieur de ladite feuille, des creux ou des cavités, lesdits moyens de séparation se trouvant dans la surface interne d'une feuille non luminescente ; et
v) un moyen de partage, faisant en sorte qu'au moins l'un desdits réactifs n'atteigne pas la totalité du volume dudit espace pendant ledit effet chimioluminescent ;
dans lequel ledit effet est lancé, et les images luminescentes sont créées, par enlèvement dudit moyen de séparation.

2. Dispositif selon la revendication 1, dans lequel lesdites deux feuilles imperméables aux fluides comprennent une feuille de polyoléfine ayant une épaisseur de 0,01 à 10 mm.

3. Dispositif selon la revendication 1, dans lequel l'une desdites deux feuilles imperméables aux fluides comprend un stratifié aluminium/polyoléfine.

4. Dispositif selon la revendication 1, dans lequel ledit support comprend un composant choisi dans le groupe consistant en le coton, la viscose, les fibres de polyoléfine, le PE ou le PP non tissé, le polyester, l'acétate de cellulose, le poly(téréphtalate d'éthylèneglycol), les fibres de verre, la cellulose, le PVC poreux, les plastiques poreux et les mélanges de ceux-ci, ledit composant pouvant être tissé, non tissé, stratifié, et en outre pouvant être chimiquement réticulé ou modifié, ou physiquement traité.

5. Dispositif selon la revendication 1, dans lequel ledit support a une épaisseur d'environ 0,01 à environ 15 mm.

6. Dispositif selon la revendication 1, dans lequel ledit composé chimioluminescent est choisi dans le groupe consistant en les oxalates de bis(aryle) substituées et le phtalhydrazide substitué.

7. Dispositif selon la revendication 1, dans lequel ledit colorant fluorescent est un hydrocarbure polyaromatique éventuellement substitué, et ledit peroxyde est un hydroperoxyde.

8. Dispositif chimioluminescent selon la revendication 1, dans lequel lesdits réactifs comprennent un colorant, fournissant une image multiforme, et en option aussi une image en plusieurs couleurs, par impression d'une photo en couleurs sur ladite feuille translucide ou transparente imperméable aux fluides.

9. Dispositif chimioluminescent selon la revendication 1, fournissant des images multiformes et en plusieurs couleurs, lesdits réactifs comprenant deux colorants, ou plus.

10. Dispositif chimioluminescent selon la revendication 1, fournissant des images multiformes et en plusieurs couleurs, dans lequel lesdits réactifs comprennent deux colorants ou plus, tels ceux qui ont des couleurs rouge, verte et bleue, à partir desquelles toutes les autres couleurs peuvent être formées.

11. Dispositif chimioluminescent selon la revendication 1, fournissant des images multiformes et en plusieurs couleurs, dans lequel les colorants chromogènes sont pré-mélangés avant lancement dudit effet.

12. Dispositif selon la revendication 1, dans lequel lesdits moyens de séparation comprennent au moins une capsule, dans laquelle ledit peroxyde ou ledit composé chimioluminescent sont enfermés avant lancement dudit effet.

13. Dispositif selon la revendication 1, dans lequel lesdits moyens de partage comprennent la subdivision dudit support en un nombre plus grand de parties non connectées.

14. Dispositif selon la revendication 1, dans lequel ledit moyen de partage comprend l'immobilisation d'au moins l'un desdits réactifs sur ledit support.

15. Dispositif selon la revendication 1, comprenant le dépôt d'au moins un colorant sur ledit support.

16. Dispositif selon la revendication 15, dans lequel ledit dépôt est réalisé par utilisation d'une technique courante d'impression.

17. Dispositif selon la revendication 16, dans lequel au moins un colorant est déposé de façon à créer un motif qui peut luminescer après contact dudit support avec ledit peroxyde et ledit composé chimioluminescent.

18. Dispositif selon la revendication 16, dans lequel trois colorants, ayant des couleurs rouge, verte et bleue, sont utilisés pour permettre la formation de toutes les couleurs conformément au système additif, et pour créer une image luminescente en plusieurs couleurs après contact dudit support avec ledit peroxyde et ledit composé chimioluminescent.

19. Dispositif selon la revendication 1, dans lequel ledit moyen de partage comprend la diminution de la mobilité de certains des réactifs dans ledit espace.

20. Dispositif selon la revendication 19, dans lequel ladite mobilité est diminuée par diminution de la solubilité d'au moins l'un desdits réactifs dans ledit solvant.

21. Dispositif selon la revendication 1, dans lequel ledit espace est compartimentalisé, et lesdits réactifs sont séparés dans les différents compartiments.

22. Dispositif selon la revendication 21, comprenant une matrice ou un réseau de capsules.

23. Dispositif selon la revendication 21, comprenant un réseau de microcapsules.

24. Dispositif selon la revendication 22 ou 23, dans lequel la distribution des capsules garantit le contrôle de l'intensité et de la couleur de la lumière émise à partir de l'aire totale dudit dispositif, ainsi que de la résolution de l'image.

25. Dispositif selon la revendication 22 ou 23, dans lequel la distribution des capsules garantit une luminescence uniforme à partir de la totalité de l'aire ayant la même couleur prévue.

26. Dispositif selon la revendication 1, dans lequel lesdits réactifs sont séparés en différentes phases.

27. Dispositif selon la revendication 1, dans lequel ledit moyen de séparation peut être enlevé progressivement, de telle sorte que différentes parties de l'image commencent à luminescer à des instants différents.

28. Dispositif selon la revendication 1, dans lequel ladite feuille translucide ou transparente est imprimée sur sa surface, en fournissant une photo ou des caractères que l'on voit dans la lumière fluorescente traversante.

29. Dispositif selon la revendication 1, comprenant en outre un couvercle transparent ou translucide extérieur additionnel, adjacent à une ou deux desdites feuilles imperméables aux fluides, dans lequel ledit couvercle est imprimé de façon à produire une image multiforme ou en plusieurs couleurs dans la lumière chimioluminescente traversante.

30. Dispositif selon la revendication 1, dans lequel ledit support ou au moins l'une des deux feuilles possède des motifs ou des photos créés sur leur surface par des colorants et pigments non fluorescents.

31. Dispositif selon la revendication 30, dans lequel lesdits motifs ou photos sont imprimés sur les faces intérieure ou extérieure desdites feuilles, ou sur l'une des faces dudit support, ou sur les deux.

32. Dispositif selon la revendication 1, dans lequel une vignette adhésive, translucide ou transparente, est placée sur la face extérieure desdites feuilles.

33. Dispositif selon la revendication 1, qui luminesce sur les deux faces.

34. Dispositif selon la revendication 33, présentant différentes images sur lesdites deux faces.

35. Dispositif selon la revendication 1, dans lequel l'une desdites deux feuilles comprend une couche réfléchissante.

36. Dispositif selon la revendication 1, dans lequel ledit effet chimioluminescent comprend une lumière non visible à l'oeil nu.

37. Dispositif selon la revendication 36, dans lequel ladite lumière est choisie parmi l'ultraviolet et l'infrarouge.

38. Dispositif selon la revendication 37, comprenant un rayonnement thermique.

39. Dispositif selon la revendication 1, dans lequel ledit moyen de séparation comprend une capsule séparée du reste du dispositif par une couche imperméable.

40. Dispositif selon la revendication 39, dans lequel ladite capsule a la forme d'une ampoule, ou a la forme d'une bulle ou d'une cavité dans ladite feuille imperméable aux fluides ou dans ledit support.

41. Dispositif selon la revendication 1, dans lequel ledit moyen de séparation comprend une feuille à blisters alu-alu.

42. Dispositif selon la revendication 41, dans lequel ladite feuille à blisters est formée par le procédé de façonnage à froid ou le procédé de thermoformage.

43. Dispositif selon la revendication 1, qui est une carte de voeux.

44. Dispositif selon la revendication 1, ayant la forme d'un drapeau.

45. Procédé de préparation d'un dispositif chimioluminescent selon la revendication 1, comprenant
i) la mise à disposition d'un tampon absorbant sous forme d'une feuille mince ;
ii) la mise à disposition de réactifs capables de produire un effet chimioluminescent, comprenant au moins un composé chimioluminescent, un peroxyde, un solvant et un ou plusieurs colorants fluorescents ;
iii) la séparation d'au moins ledit peroxyde ou dudit composé chimioluminescent à l'intérieur d'au moins une capsule non perméable ;
iv) la fermeture dudit support entre les deux feuilles polymères imperméables aux fluides, ayant une forme semblable à la forme dudit support, au moins l'une desdites feuilles étant translucide ou transparente ; et
v) la mise à disposition d'un moyen de partage, empêchant qu'au moins l'un des deux réactifs n'atteigne le volume total dudit espace après rupture de ladite capsule.

46. Procédé selon la revendication q.₅, comprenant en outre
vi) en option, la création d'une forme requise sur la surface dudit support comprenant des matériaux non fluorescents ou fluorescents, et
vii) la mise en contact dudit support avec un ou plusieurs réactifs nécessaires à la production de l'effet chimioluminescent, laquelle mise en contact comprend une imprégnation, une imbibition, une immersion ou une pulvérisation.

47. Procédé selon la revendication 46, dans lequel ladite création comprend l'impression ou l'application d'une peinture ou la pulvérisation ou l'immersion.

48. Procédé selon la revendication 46, dans lequel ledit matériau comprend un composé choisi dans le groupe consistant en les composés chimioluminescents, les colorants fluorescents et le mélange de ceux-ci.

49. Procédé selon la revendication 45, qui est automatisé, comprenant la reprise dudit support à partir d'un empilement de supports, ou la découpe dudit support à partir d'un rouleau de supports, l'impression d'une photo sur le support, éventuellement une commande pressante d'un client, le mouillage du support dans ledit peroxyde, et le scellement du support à l'intérieur d'un sac plastique imperméable.

50. Procédé automatique selon la revendication 49, fournissant instantanément un dispositif sous forme d'une image luminescente, éventuellement sous forme d'un ticket, d'une étiquette, d'une marque, d'une publicité ou d'une identification personnelle pour une occasion à court terme.

51. Procédé automatique selon la revendication 50, dans lequel ladite occasion comprend une représentation, une discothèque, l'entrée dans un lieu commercial, ou l'entrée dans une réunion ou un congrès.

52. Procédé selon la revendication 45, comprenant en outre viii) l'impression, sur ladite feuille transparente ou translucide, d'une image multiforme ou en plusieurs couleurs, visible dans la lumière chimioluminescente traversante.

53. Procédé selon la revendication 45, comprenant en outre
ix) la création de blisters alu-alu par une technique de façonnage à froid ; et
x) la séparation, dans lesdits blisters, d'au moins un réactif, sous une forme liquide.

54. Dispositif selon la revendication 1, qui est une carte de voeux ou une carte postale.

55. Procédé selon la revendication 45, pour produire un dispositif chimioluminescent sous forme d'une carte de voeux, comprenant :
i) la création d'une feuille à blisters par la technologie du façonnage à froid, par utilisation d'un stratifié d'aluminium à trempe douce ;
ii) la création de blisters par une technique de thermoformage de polymères, lesquels polymères sont métallisés ;
iii) le remplissage des blisters avec une première partie des réactifs en solution ;
iv) le scellement (recouvrement) desdits blisters par un aluminium à trempe dure ;
v) la mise à disposition d'un tissu absorbant, de préférence en un polymère plastique, et son imprégnation par une deuxième partie des réactifs en solution, en option la création, sur ce tissu, d'une image ou d'un motif avec des colorants non fluorescents ou fluorescents ;
vi) le positionnement ou la fixation dudit tissu absorbant sur ladite feuille à blisters ;
vii) le positionnement ou la fixation d'une feuille plastique extérieure sur ledit tissu absorbant, ladite feuille extérieure étant en option pourvue d'une image imprimée ;
viii) le fait de s'assurer que les couches de ladite feuille à blisters et de ladite feuille extérieure et en option dudit tissu absorbant, sont scellées l'une à l'autre au niveau de leurs bords, ce qui crée une partie image de ladite carte postale ; et
ix) la connexion de ladite partie image au niveau desdits bords à une partie adresse, sur laquelle une adresse et un voeu sont écrits ou imprimés.

56. Procédé selon la revendication 55_{,} comprenant :
i) la création d'une feuille à blisters par la technologie de façonnage à froid ;
ii) la création de blisters par une technique de thermoformage ;
iii) le remplissage des blisters par une première partie des réactifs en solution ;
iv) le scellement (recouvrement) desdits blisters par de l'aluminium à trempe dure ;
v) la mise à disposition d'un tissu absorbant et son imprégnation par une deuxième partie des réactifs en solution ;
vi) le positionnement ou la fixation dudit tissu absorbant sur ladite feuille à blisters ;
vii) la mise à disposition d'une feuille plastique extérieure portant sur sa surface une image ou un motif imprimé, et son positionnement ou sa fixation sur ledit tissu absorbant ;
viii) le fait de s'assurer que les couches de ladite feuille à blisters et de ladite feuille extérieure et en option dudit tissu absorbant, sont scellées l'une à l'autre au niveau de leurs bords, ce qui crée la partie image de ladite carte postale ; et
ix) la connexion de ladite partie image au niveau desdits bords à la partie adresse sur laquelle une adresse et un voeu sont écrits ou imprimés.

57. Procédé selon la revendication 55, dans lequel lesdites couches sont scellées par brasage ou collage.

58. Procédé selon la revendication 55, dans lequel ladite carte postale est repliée avant envoi, le long des lignes de connexion entre ladite partie image et ladite partie adresse.

59. procédé selon la revendication 55, dans lequel ladite carte postale comprend un élément de sécurité, qui empêche que lesdits blisters ne se rompent avant d'arriver au destinataire.
